# EUROPEAN PATENT SPECIFICATION

(11) **EP 3 032 019 B1**
(45) Date of publication and mention of the grant of the patent: **09.11.2022**
(21) Application number: 14197722.3
(22) Date of filing: 12.12.2014
(51) Int. Cl.: E05F 15/43

(54) **Sensor for object detection for automatic doors**
Sensor zur Objekterkennung für automatische Türen
Capteur pour la détection d'objet pour portes automatiques

(43) Date of publication of application: 15.06.2016
(73) Proprietor: BEA S.A., 4031 Angleur (BE)
(72) Inventor: Eubelen, Emmanuel, 4607 Dalhem (BE); Sarlette, Laurent, 4000 Liège (BE); Campas, Théodoros, 4100 Boncelles (BE)
(74) Representative: Puschmann Borchert Kaiser Klettner Patentanwälte Partnerschaft mbB

(56) References cited:
- EP-A1- 1 693 544
- DE-A1- 4 344 729
- DE-U1- 29 513 962
- DE-U1-202009 000 683
- JP-A- 2014 029 112
- "CONDOR/-XL", , 13 July 2011 (2011-07-13), XP055191906, Retrieved from the Internet: URL:http://www.bea-industrial.be/uploads/d ocs/application_notes/an_condor_f1_de_v1.p df [retrieved on 2015-05-28]
- "Ditec PAS024AS(W)", , 1 August 2014 (2014-08-01), XP055191847, Retrieved from the Internet: URL:http://ftp.ditec.it/manuali/Manuali_Qu arto/PAS024AS_EN_v1.pdf [retrieved on 2015-05-28]

## Description

The invention refers to a sensor for automatic doors according to claim 1.

From B.E.A's DT3 Door sensor is known that a sensor for an automatic door monitoring a detection area comprises a first detection unit, particularly for motion detection, and a second detection unit, particularly for presence detection of an object within a detection area.

Door sensors known by the state of the art comprise an internal control unit, to which a first detection unit and a second detection unit are connected to.

The sensor furthermore comprises a first output dedicated to output the signal related to the first detection unit that is connected to the internal control unit, and a second output dedicated to output the signal related to the second detection unit, and a digital input port being able to receive a digital input signal that is connected to the internal control-unit.

The "Condor/- XL" sensor allows a configuration of certain transmission modes where an output signal in dependency of the presence detection signal and the motion detection signal can be applied to a output port that is dedicated to the motion output.

EP 1 693 544 A1 is disclosing a sensor comprising a motion detection unit and a presence detection unit. For working together with a control unit a sensor could be used that generates a signal on a single output port dependent on the motion and presence detection signal.

The DE 20 2009 000 683 U1 discloses a door system with a safety sensor, where the door system comprises a detection unit that detects different sensor signals in parallel and groups them depending on a requested action to be executed and outputs them on a collective line.

According to a first mode -single-bit-message output mode-, an output signal is output on the first output port, where the output signal is either a source signal of the first detection unit or a signal that is created based on an input signal received via the digital input and the source signal provided by the first detection unit. According to this first state an output signal is output on the second output port where either a source signal of the second detection or a signal created based on an input signal is received via the digital input and the source signal provided by the second detection unit. In this state each output provides a 'single-bit message', which means that information regarding a detection status (detecting / not detecting) of only one detection unit is provided continuously. This information can particularly be applied by a conventional output port being e.g. an electronic switch, a solid state relay or a current or a voltage source.

The output ports are meant to be connected to an external door control unit to control the door with regard to the detected signals. Such conventional external door control units accept a single-bit message on their respective input ports.

Due to this, the wiring of a sensor is rather difficult, because there needs to be a line for each detection unit as described in the DE 20 2009 000 683 U1.

It is object of the invention to improve wiring conditions for a door sensor that comprises at least two detection units.

A known sensor as described above, furthermore comprises a configuration means which allows a configuration of the sensor to at least two alternative transmission modes, where beside the 'single-bit message' output mode, at least a second mode '-multi-bit message output mode-' can be selected. A 'multi-bit-message' has a certain/predefined message duration, a digital signal, ergo alternating 0 and 1 states are transmitted. A transmission mode combines a certain input and a certain output mode.

In the '-multi-bit message output mode-' a combined output signal is created based on a source signal that is provided by the first detection unit and the source signal that is provided by the second detection unit. The 'multi-bit-message' contains information of the detection status (Detecting / not-detecting) of at least two detection units of at least one sensor. This combined information signal is output on the first and / or the second output port.

According to the invention the sensor may also provide different input modes. There are e.g. a '-No-message input mode-', a
'-single-bit-message input mode-' and a '-multi-bit-message-input mode-'. The sensor may be set to combined transmission modes, e.g. a 'multi-bit-message input' and 'multi-bit-message- output'.

According to the invention such a transmission mode, a signal can also be a combined signal that is created based on the digital input signal containing a 'multi-bit-message' and the source signal that is provided by the first detection unit and the source signal that is provided by the second detection unit, is output as 'multi-bit-message' on the first output and / or the second output port.

According to this concept the status information (detecting / not-detecting) of both detection units can be transmitted via a single output port. By connecting the output port to a subsequent input port of a sensor, a signal referring to at least two detection units can be forwarded as a 'multi-bit-message' via a single physical line.

The signal can be transmitted as serial data. By providing a configuration means to switch between this two modes of 'multi-bit-message' and 'single-bit-message' communication the sensor can be easily adjusted to single sensor applications where a single sensor is connected to an external door controller or a multiple sensor application, where the sensors are serially connected and communicate by serial communication through the same port as in the single sensor application.

The input port that is conventionally used for monitoring purposes i.e. to trigger a test output in 'single-bit-message-input' mode, can be configured to accept a 'multi-bit-message', particularly serial data. This data can be taken into account by providing an output signal based on the first detection unit and the second detection unit. According to this transmission mode the serial data can be forwarded by using the conventional single-bit-message ports.

In a further advantageous embodiment, the configurations means are adapted to switch to a further transmission mode 'Decoding-mode', where the digital input signal contains a 'multi-bit-message' signal, The digital input signal that is received via the digital input port is decoded and output to the corresponding first and second output as signal containing a 'single-bit-message'.

The input signal containing the information of detection status of two detection units of previous serially connected sensors, can be retrieved by the internal control unit. This data can be resolved and a 'single-bit-message' can be applied to the output ports of a last sensor of serially connected multiple sensors to communicate with the external door controller in a conventional way. In this case the serially connected sensors are seen as a single sensor by the external door controller,

Usually it is defined that, if at least one sensor of the serially connected sensors is detecting an object with a detection unit, a detection signal is communicated to the external door controller.

The serial data may comprise a frame having certain values (e.g. bits) where each value is dedicated to a detection unit. There may be a value set for a frame that is related to the detection status of the detection unit. I.e. "1" if the detection unit is detecting an object and "0" if the detection unit is not detecting an object.

By connecting the active output port to an input port of a subsequent sensor, the serial data can be forwarded in a way that the values relating to the respective detection units are updated by each sensor. This means, if a sensor receives a frame where the value of a first detection unit is set to '0' by a prior sensor, the control unit may change this value to '1' if the first detection unit of the sensor analyzing the data is detecting an object. A modified 'multi-bit-message' may then be forwarded to the next sensor.

According to a further advantageous embodiment, the first detection unit and the second detection unit are embodied either for motion detection or presence detection or the first detection unit is embodied as presence detection unit and the second detection unit is embodied as motion detection unit. A sensor according to the invention may also comprise more than two detection units. The data is then adjusted accordingly. The detection unit may e.g. be a microwave detector, laser detector.

The outputs of the sensor can be embodied as solid state relay or as electronic switch, particularly an optomos, an optocoupler, an oc-transistor, especially a MOSFET type-e transistor.

The problem by using a switch conventionally providing a 'single-bit-message' is that the switches are improved to fulfill the requirements of providing 'single-bit-message'. Very good properties are known for optosolated components Optocoupler, like Opto-MOS.

According to the invention it was found by the inventors that the optoelectronic switches can vary very strongly with regard to timing conditions. There are e.g. manufacturing tolerances or distortions induced by temperature changes. To apply a 'multi-bit-message' to a system using optoelectronic switches, a reference signal is used that is memorized in the internal control unit of the sensor.

According to a further aspect of the invention, in 'multi-bit-message'-mode a calibration signal is provided. To allow the analysis of the received distorted message-signal a calibration signal is sent in advance to the message signal. The received calibration signal is compared to the memorized reference signal. Due to this comparison, the differing parameters are evaluated and can then be taken into account by correctly resolving the subsequent message signal. The use of a calibration frame has the advantage that the overall distortion effects can be taken into account, i.e. distortion effects of the output switch encoding the 'multi-bit message' as well as distortion effects appearing by receiving the 'multi-bit-message' on the input port.

Preferably the reference signal as well as the calibration signal is a square wave signal. By using a square wave signal the significant rise and falltime of the switch can easily be evaluated, since they are dependent only on a single parameter.

The configuration means can be embodied as a software component allowing the internal control unit to switch between different configurationally states.

The configuration means can also be embodied as mechanical switch as e.g. a dip-switch.

According to a further embodiment the configuration means can be embodied as contacts that are connected by a wire.

According to the invention the same type of sensor can be used in a single sensor application or in a serial type application. E.g. within a serial connection of three sensors, a first sensor can be set in configurationally state -generation state-, where the sensor can output a communication frame on the first output, based on the source signals of the first detection unit and the second detection unit.

The second sensor is serially connected to the first sensor by connecting the input port of the second sensor to the first output port of the first sensor. The second sensor then receives a coded data containing information of the first and the second detection unit of the first sensor. The second sensor is set to a second configurationally state -forwarding state-. In this state the sensor can receive a signal containing multi-bit information and update the data with regard to the source signal received by the first and the second detection unit and output the updated data signal on the first output port.

A third sensor can be connected serially to the second sensor by connecting the first output of the second sensor to the input port of the third sensor. The third sensor can be set to a third configurationally state -decoding state-. In the decoding state the third sensor receives multi-bit data signal via its input port, containing the combined information of the first and the second detection unit of the first and the second sensor. The internal control unit can decode this information and update it with regard to its own first and second detection unit. In -decoding state- the sensor outputs a single bit signal on the first output based on the updated information with regard to the first detection unit for all three sensors, and a single-bit signal on the second output port depending on the updated information of the second detection units of all three sensors. The first and the second output port of the third sensor can be connected to an external door control unit. The three sensors appear as one to the external door control unit.

The wiring can simply be done by a single physical line, since all information of all detection units can be transmitted as serial data by a serial protocol using the conventional single-bit outputs dedicated to a certain detection unit.

Further advantages, features and potential applications of the present invention may be gathered from the description which follows, in conjunction with the embodiments illustrated in the drawings,

Throughout the description, the claims and the drawings, those terms and associated reference signs will be used as are notable from the enclosed list of reference signs. In the drawings is shown
- Fig. 1: a schematic view of a sensor according to the invention in a -single-bit message transmission mode;
- Fig. 2: a schematic view of a sensor according to the invention in a -multiple-bit-message output transmission mode
- Fig. 3: a schematic view of a sensor according to the invention in a -multiple-bit-message input / single-bit-message output mode
- Fig. 4: a schematic view of three sensors according to the invention in a daisy chain setup, and
- Fig.5: a schematic view of a single sensor application

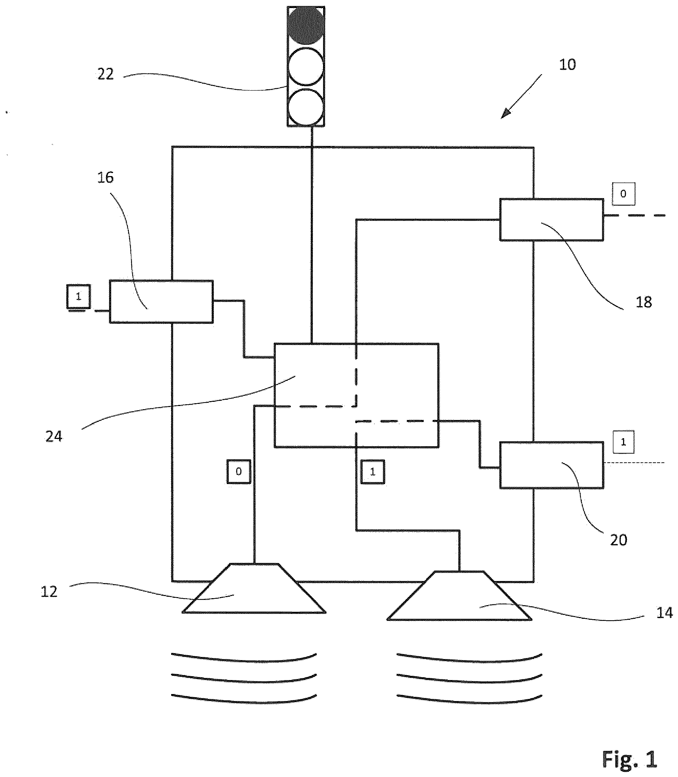

Fig. 1 shows a schematic view of a sensor 10. The sensor 10 comprises a motion detection unit 12 and a presence detection unit 14. The motion detection unit 12 and presence detection unit 14 are able to detect an object within their surveillance area. The motion detection unit 12 and the presence detection unit 14 output a signal containing a message whether an object was detected or not. The message is exemplarily marked '1' for there is an object detected by the presence detection unit 14, but no movement is detected, so the message related to the motion detection unit 12 is marked 0.

The sensor 10 comprises an input port 16 to receive an input signal, and at least two output ports 18, 20 where each output port is assigned to output either the motion detection message or the presence detection message. Furthermore, the sensor comprises a configuration means 22 to select a certain transmission mode. According to Fig.1 the configuration means 22 is embodied as a DIP-switch having three switching states. The sensor 10 according to Fig. 1 is set to a -single-bit message transmission mode-. This means that the internal control unit 24 is set to a -single-bit-message input - that could be a monitoring test signal, to trigger the current output of the current sensor detection states. The input message is marked 1. By using the single bit message transmission mode, the internal control unit is set to output a single-bit message on each output 18, 20. According to Fig. 1 the first output port 18 is set to output the detection state information according to the detection state of the motion detection unit 12, and, therefore, the output single-bit message is also marked 0. The second output port 20 is set to a single bit message according to the detection state of the presence detection unit 14 and the output message marked as 1.

This single bit message transmission mode is used for single sensor applications, where a single sensor is connected to a conventional external door controller.

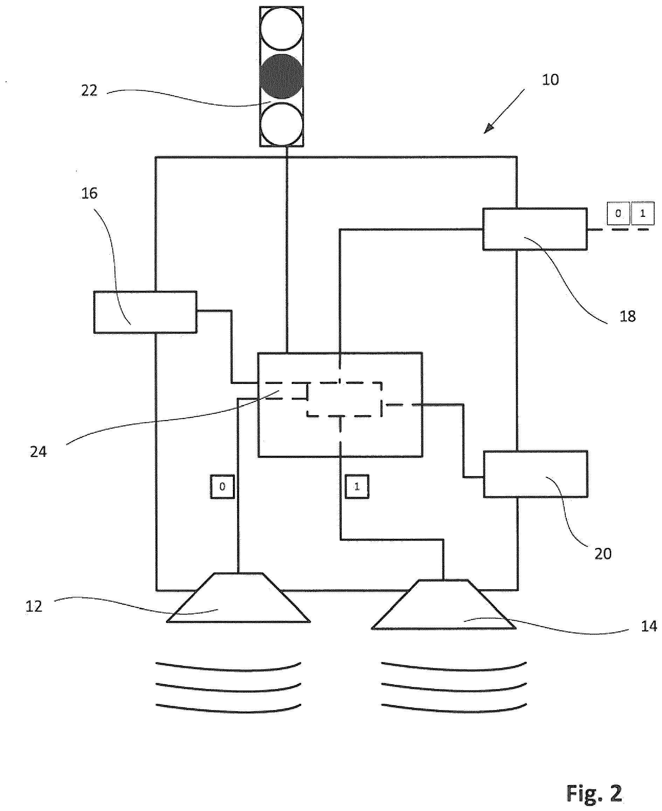

Fig. 2 shows a schematic view of a sensor 10 set to a multiple-bit-message output / no-message input transmission mode. The sensor 10 has the same detection units 12, 14, input port 16 and output ports 18, 20 and configuration means 22 and internal configuration unit 24 are the same as described in Fig. 1.

In difference to Fig 1, the DIP-switch 22 is set to a multiple-bit-message output / no-message input transmission mode. According to this mode, the information related to the detection status of the presence detection unit 14 and the motion detection unit 12 are combined in a multi-bit message that is output on the first output port 18. The multi-bit message is marked with the bit sequence 1-0, The first bit of the message represents the presence detection status and the second bit represents the motion detection status. The message may contain additional information as header or the like in style of serial protocol for example.

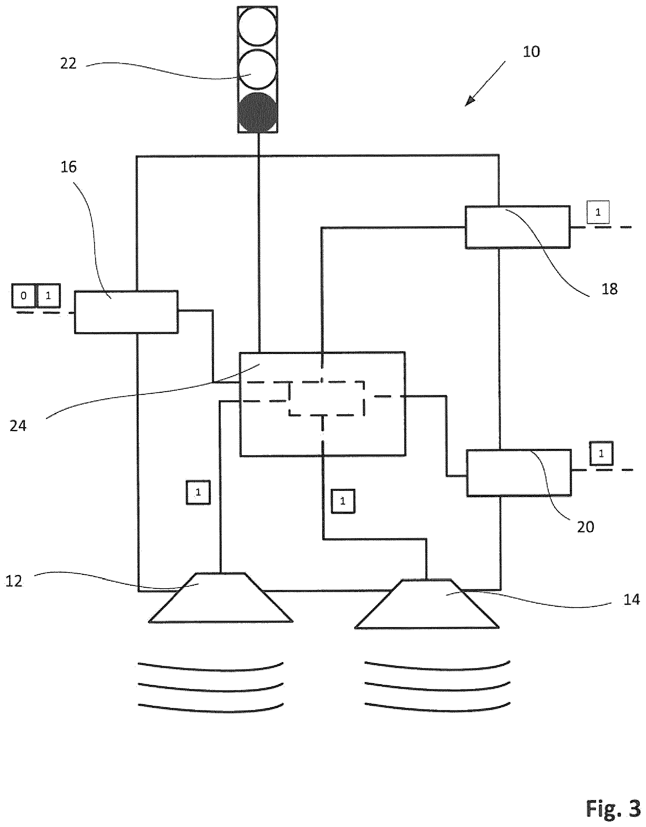

Fig. 3 shows a schematic view of a sensor 10 according to the invention in a -multiple-bit-message input / single-bit-message output mode. The sensor 10 has the same detection units 12, 14, input port 16 and output ports 18, 20 and configuration means 22 and internal configuration unit 24 are the same as described in Fig. 1.

According to Fig. 3, the DIP-switch is set to a third mode, being a -multiple-bit-message input / single-bit-message output - mode. In this mode the internal control unit is set to evaluate a multi-bit message received via the input port 16. This message may be sent via an output by a previous sensor 10 i.e. Fig.2.

This signal is resolved by the internal control unit 24 according to a predefined protocol. The internal control unit 24 knows that the first message bit is related to the presence detection unit and the second bit is related to the motion detection unit of a previous sensor 10. The internal control unit compares the received message bits to the detection status information of the motion detection unit 14 and the presence detection unit 12 connected to the internal control unit 24. It sets the output 18 corresponding to the presence detection unit 12 to a single-bit message being a result of a logical or comparison of the received detection status and the detection status measured by the presence detection unit 12. The same applies for motion detection unit 14 and its corresponding output 20.

In this transmission mode a multiple-bit message can be resolved and allows a communication of multiple sensors to communicate with an external door controller having a single bit message input. By providing such a sensor configurable to the explained three transmission modes, a connection of two serial sensors is possible.

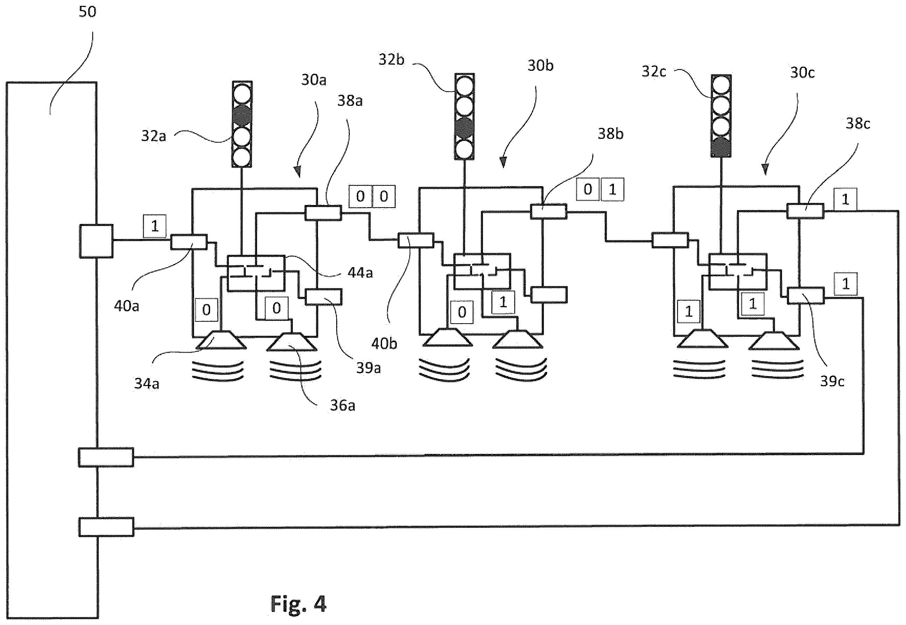

An advanced function of a sensor having four transmission modes is explained in more detail by Fig. 4 where a daisy chain of three sensors is shown.

Fig. 4 shows a daisy chain arrangement of three identical sensors 30a, 30b, 30c in different modes, shown by the position of the black dot within the configuration means 32a, 32b, 32c. The sensors 30a, 30b, 30c are serially connected to each other, where the first sensor 30a and the last sensor 30c of the chain are connected to an external door control unit 50. The first sensor 30a is set to a single-bit message input / multi-bit message output mode. On receiving a single-bit message from the door controller via its input port 40a, it outputs the detection status of the detection units 34a, 36a as a multi-bit message on the first port 38a. The second output port 39a is not connected. How this output is generated by the internal control unit 44a has already been explained in Fig. 2. Such a multi-bit message (0-0) is then forwarded to the input port 40b of the subsequent sensor 30b. The multi-bit message is updated with regard to the detection status of the detection units 34b, 36b by a logical 'OR' comparison. An updated multi-bit message (1-0) is then forwarded through the output port 38b of the second sensor 30b. This signal is then received by a third sensor 30c which is set to a -multiple-bit-message input / single-bit-message output - mode. Like already described in Fig. 3 the multi-bit signal is decoded by the internal control unit and compared to the detection status of the detection units 34c, 36c, and output as a single-bit message, where the presence detection is assigned to the first output port 38c and the motion detection output is assigned to the second output 39c. The outputs, outputting a single - bit message, are connected to the inputs of a door control unit 50. In view of the conventional door control unit 50 the daisy chain arrangement appears as one sensor.

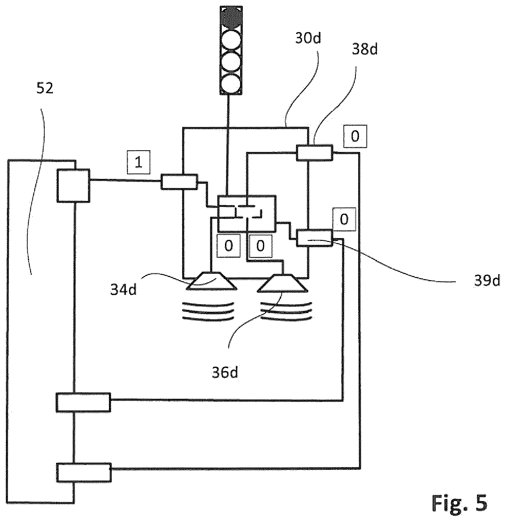

Fig. 5 shows a sensor 30d in a single sensor application where the configuration means 32d is set to a single-bit message transmission mode as described in Fig.1, A conventional external door controller 52 is operated and connected accordingly. A single-bit-message based on the detection status of the first detection unit 34d and the second detection unit 36d is transmitted to the extend door controller 52 via the first output port 38d and the second output port 39d.

According to the invention the same type of sensor can easily be used in a single sensor application as well as in a multi-sensor application only by adjusting the operation modes, by only using one connecting wire.

### List of reference signs

- 10: sensor
- 12: motion detection unit
- 14: presence detection unit
- 16: input port
- 18: first output port
- 20: second output port
- 22: configuration means
- 24: internal control unit
- 30 a,b,c,d: sensor
- 32 a,b,c,d: configuration means
- 34 a,b,c,d: motion detection unit
- 36 a,b,c,d: presence detection unit
- 38 a,b,c,d: first output port
- 39 a,c,d: second output port
- 40 a,b: input port
- 44 a: internal control unit
- 50: external control unit
- 52: external control unit

## Claims

1. Sensor (10, 30) for an automatic door monitoring a detection area comprising
a first detection unit (12, 34 a,b,c,d ) and a second detection unit (14, 36 a,b,c,d) for detecting an object within the detection area,
an internal control unit (24, 44a), to which the first detection unit (12, 34 a,b,c,d ) and the second detection unit (14, 36 a,b,c,d ) are connected,
the sensor furthermore comprises
a first output port (18, 38 a,b,c,d) dedicated to output the signal related to the first detection unit (12, 34 a,b,c,d) that is connected to the internal control unit (24, 44a), and
a second output port (20, 39 a,c,d) dedicated to output the signal related to the second detection unit (14, 36 a,b,c,d) that is connected to the internal control unit (24, 44a),
the sensor furthermore comprises a
configuration means (22, 32 a,b,c,d) which allows configuration of at least two alternative transmission modes, where according to a first transmission mode a first output mode is set, where a signal based on the source signal provided by the first detection unit (12, 34 a,b,c,d) is output on the first output port (18, 38 a,b,c,d) and / or a signal based on the source signal provided by the second detection unit (14, 36 a,b,c,d), is output on the second output port (20, 39 a,c,d),
and in a second transmission mode a second output mode is set, where a combined output signal, which is created based on
- the source signal provided by the first detection unit (12, 34 a,b,c,d) and
- the source signal provided by the second detection unit (14, 36 a,b,c,d),
is output on the first output port (18, 38 a,b,c,d) and / or the second output port (20, 39 a,c,d) the sensor furthermore comprises an input port (16, 40 a,b) that is connected to the internal control unit (24), and where the configuration means (22, 32 a,b,c,d) is adapted to select a transmission mode where an output signal is created in dependency of the input signal received via the input port (16, 40 a,b) and fed to the first output port (18, 38 a,b,c,d) and / or the second output port (20, 39 a,c,d), **characterized in that** the first output port (18, 38 a,b,c,d) or the second output port (20, 39 a,c,d) is connectable to an input port of an identical sensor (10, 30) via a physical line.

2. Sensor according to claim 1, **characterized in that,** the configuration means (22, 32 a,b,c,d) is embodied as a switch, e.g. dip switch.

3. Sensor according to claim 1, **characterized in that,** the configuration means (22, 32 a,b,c,d) is embodied as software on the internal control unit (24, 44a).

4. Sensor according to one of the preceding claims, **characterized in that** the configuration means (22, 32 a,b,c,d) is adapted to select a transmission mode set to an input mode, where the input signal is a combined signal and the signal is decoded related to a first detection unit (12, 34 a,b,c,d) information and a second detection unit (14, 36 a,b,c,d) information.

5. Sensor according to one of the preceding claims, **characterized in that** the configuration
means (22, 32 a,b,c,d) is adapted to select a transmission mode where the output signal is created based on information with regard to the source signal provided by the first detection unit (12, 34 a,b,c,d) and the source signal provided by the second detection unit (14, 36 a,b,c,d) and the information of the input signal.

6. Sensor according to one of the preceding claims, **characterized in that** the combined signal uses a serial protocol.

7. Sensor according to one of the preceding claims, **characterized in that** the first output port (18, 38 a,b,c,d) and/or the second output port (20, 39 a,c,d) comprises a solid state relay.

8. Sensor according to one of the preceding claims, **characterized in that** the first output port (18, 38 a,b,c,d) and/or the second output port (20, 39 a,c,d) comprises an electronic switch.

9. Sensor according to claim 8, **characterized in that** the first output port (18, 38 a,b,c,d) comprises an optomos.

10. Sensor arrangement comprising at least a first and a second sensor according to one of the preceding claims where the input port (16, 40 a,b) of a second sensor is connected to the first output port (18, 38 a,b,c,d) or the second output port (20, 39 a,c,d) of the previous first sensor.

11. Sensor arrangement according to claim 10, **characterized in that** the first sensor is set to the second input mode where the combined signal is output on the first output port (18, 38 a,b,c,d) and the second sensor is set to first output mode.

12. Sensor arrangement according to one of the preceding claims 10 to 11, **characterized in that** the first detection unit (12, 34 a,b,c,d) and/or the second detection unit (14, 36 a,b,c,d) is embodied as a presence detection unit (14, 36 a,b,c,d).

13. Sensor arrangement according to one of the preceding claims 10 to 12, **characterized in that** the first detection unit (12, 34 a,b,c,d) and/or second detection unit (14, 36 a,b,c,d) is embodied as a motion detection unit (12, 34 a,b,c,d).

## Patentansprüche

1. Automatiktür-Sensor (10, 30) zur Überwachung eines Erfassungsbereichs, umfassend:
eine erste Erfassungseinheit (12, 34 a,b,c,d) und eine zweite Erfassungseinheit (14, 36 a,b,c,d) zum Erfassen eines Objekts innerhalb des Erfassungsbereichs,
eine interne Steuereinheit (24, 44a), mit der die erste Erfassungseinheit (12, 34 a,b,c,d) und die zweite Erfassungseinheit (14, 36 a,b,c,d) verbunden sind,
wobei der Sensor des Weiteren umfasst:
einen ersten Ausgangsanschluss (18, 38 a,b,c,d), der dazu bestimmt ist, das auf die erste Erfassungseinheit (12, 34 a,b,c,d) bezogene Signal auszugeben, die mit der internen Steuereinheit (24, 44a) verbunden ist, und einen zweiten Ausgangsanschluss (20, 39 a,c,d),
der dazu bestimmt ist, das auf die zweite Erfassungseinheit (14, 36 a,b,c,d) bezogene Signal auszugeben, die mit der internen Steuereinheit (24, 44a) verbunden ist,
wobei der Sensor des Weiteren umfasst:
ein Konfigurationsmittel (22, 32 a,b,c,d), das die Konfiguration von mindestens zwei alternativen Übertragungsmodi ermöglicht, wobei gemäß einem ersten Übertragungsmodus ein erster Ausgangsmodus eingestellt wird, bei dem ein auf dem von der ersten Erfassungseinheit (12, 34 a,b,c,d) bereitgestellten Quellsignal basierendes Signal am ersten Ausgangsanschluss (18, 38 a,b,c,d) ausgegeben wird und/oder ein auf dem von der zweiten Erfassungseinheit (14, 36 a,b,c,d) bereitgestellten Quellsignal basierendes Signal am zweiten Ausgangsanschluss (20, 39 a,c,d) ausgegeben wird,
und in einem zweiten Übertragungsmodus ein zweiter Ausgangsmodus eingestellt wird, bei dem ein kombiniertes Ausgangssignal erzeugt wird basierend auf
- dem von der ersten Erfassungseinheit (12, 34 a,b,c,d) bereitgestellten Quellsignal und
- dem von der zweiten Erfassungseinheit (14, 36 a,b,c,d) bereitgestellten Quellsignal,
und am ersten Ausgangsanschluss (18, 38 a,b,c,d) und/oder am zweiten Ausgangsanschluss (20, 39 a,c,d) ausgegeben wird,
wobei der Sensor des Weiteren einen Eingangsanschluss (16, 40 a,b) umfasst, der mit der internen Steuereinheit (24) verbunden ist, und wobei das Konfigurationsmittel (22, 32 a,b,c,d) derart ausgebildet ist, um einen Übertragungsmodus auszuwählen, bei dem ein Ausgangssignal in Abhängigkeit von dem über den Eingangsanschluss (16, 40 a,b) empfangenen Eingangssignal erzeugt und dem ersten Ausgangsanschluss (18, 38 a,b,c,d) und/oder dem zweiten Ausgangsanschluss (20, 39 a,c,d) zugeführt wird,
**dadurch gekennzeichnet, dass** der erste Ausgangsanschluss (18, 38 a,b,c,d) oder der zweite Ausgangsanschluss (20, 39 a,c,d) über eine physische Leitung mit einem Eingangsanschluss eines identischen Sensors (10, 30) verbunden werden kann.

2. Sensor nach Anspruch 1, **dadurch gekennzeichnet, dass** das Konfigurationsmittel (22, 32 a,b,c,d) als Schalter, beispielsweise als DIP-Schalter, ausgeführt ist.

3. Sensor nach Anspruch 1, **dadurch gekennzeichnet, dass** das Konfigurationsmittel (22, 32 a,b,c,d) als Software auf der internen Steuereinheit (24, 44a) ausgeführt ist.

4. Sensor nach einem der vorhergehenden Ansprüche, **dadurch gekennzeichnet, dass** das Konfigurationsmittel (22, 32 a,b,c,d) derart ausgebildet ist, um einen Übertragungsmodus auszuwählen, der auf einen Eingangsmodus eingestellt ist, wobei es sich bei dem Eingangssignal um ein kombiniertes Signal handelt und das Signal anhand von Daten einer ersten Erfassungseinheit (12, 34 a,b,c,d) und Daten einer zweiten Erfassungseinheit (14, 36 a,b,c,d) decodiert wird.

5. Sensor nach einem der vorhergehenden Ansprüche, **dadurch gekennzeichnet, dass** das Konfigurationsmittel (22, 32 a,b,c,d) derart ausgebildet ist, um einen Übertragungsmodus auszuwählen, bei dem das Ausgangssignal auf der Grundlage von Daten bezüglich des von der ersten Erfassungseinheit (12, 34 a,b,c,d) bereitgestellten Quellsignals und des von der zweiten Erfassungseinheit (14, 36 a,b,c,d) bereitgestellten Quellsignals und der Daten des Eingangssignals erzeugt wird.

6. Sensor nach einem der vorhergehenden Ansprüche, **dadurch gekennzeichnet, dass** für das kombinierte Signal ein serielles Protokoll verwendet wird.

7. Sensor nach einem der vorhergehenden Ansprüche, **dadurch gekennzeichnet, dass** der erste Ausgangsanschluss (18, 38 a,b,c,d) und/oder der zweite Ausgangsanschluss (20, 39 a,c,d) ein Halbleiterrelais umfasst.

8. Sensor nach einem der vorhergehenden Ansprüche, **dadurch gekennzeichnet, dass** der erste Ausgangsanschluss (18, 38 a,b,c,d) und/oder der zweite Ausgangsanschluss (20, 39 a,c,d) einen elektronischen Schalter umfasst.

9. Sensor nach Anspruch 8, **dadurch gekennzeichnet, dass** der erste Ausgangsanschluss (18, 38 a,b,c,d) ein OptoMOS umfasst.

10. Sensoranordnung mit mindestens einem ersten und einem zweiten Sensor nach einem der vorhergehenden Ansprüche, bei der der Eingangsanschluss (16, 40 a,b) eines zweiten Sensors mit dem ersten Ausgangsanschluss (18, 38 a,b,c,d) oder dem zweiten Ausgangsanschluss (20, 39 a,c,d) des vorherigen ersten Sensors verbunden ist.

11. Sensoranordnung nach Anspruch 10, **dadurch gekennzeichnet, dass** der erste Sensor auf den zweiten Eingangsmodus eingestellt ist, bei dem das kombinierte Signal am ersten Ausgangsanschluss (18, 38 a,b,c,d) ausgegeben wird, und der zweite Sensor auf den ersten Ausgangsmodus eingestellt ist.

12. Sensor nach einem der vorhergehenden Ansprüche, **dadurch gekennzeichnet, dass** die erste Erfassungseinheit (12, 34 a,b,c,d) und/oder die zweite Erfassungseinheit (14, 36 a,c,d) als Anwesenheitserfassungseinheit (14, 36 a,b,c,d) ausgeführt ist.

13. Sensor nach einem der vorhergehenden Ansprüche, **dadurch gekennzeichnet, dass** die erste Erfassungseinheit (12, 34 a,b,c,d) und/oder die zweite Erfassungseinheit (14, 36 a,c,d) als Bewegungserfassungseinheit (12, 34 a,b,c,d) ausgeführt ist.

## Revendications

1. Capteur (10, 30) pour une porte automatique surveillant une zone de détection comprenant
une première unité de détection (12, 34a, b, c, d) et une deuxième unité de détection (14, 36a, b, c, d) pour détecter un objet à l'intérieur de la zone de détection,
une unité de commande interne (24, 44a), à laquelle la première unité de détection (12, 34a, b, c, d) et la deuxième unité de détection (14, 36a, b, c, d) sont connectées,
le capteur comprend en outre
un premier port de sortie (18, 38a, b, c, d) dédié à la sortie du signal lié à la première unité de détection (12, 34a, b, c, d), qui est connecté à l'unité de commande interne (24, 44a), et
un deuxième port de sortie (20, 39a, c, d) dédié à la sortie du signal lié à la deuxième unité de détection (14, 36a, b, c, d), qui est connecté à l'unité de commande interne (24, 44a),
le capteur comprend en outre
un moyen de configuration (22, 32a, b, c, d) qui permet la configuration d'au moins deux modes de transmission alternatifs, où un premier mode de sortie est réglé selon un premier mode de transmission, où un signal basé sur le signal source fourni par la première unité de détection (12, 34a, b, c, d) est émis sur le premier port de sortie (18, 38a, b, c, d), et/ou un signal basé sur le signal source fourni par la deuxième unité de détection (14, 36a, b, c, d) est émis sur le deuxième port de sortie (20, 39a, c, d),
et un deuxième mode de sortie est réglé dans un deuxième mode de transmission, où un signal de sortie combiné, créé sur la base
- du signal source fourni par la première unité de détection (12, 34a, b, c, d) et
- du signal source fourni par la deuxième unité de détection (14, 36a, b, c, d)
est émis sur le premier port de sortie (18, 38a, b, c, d) et/ou le deuxième port de sortie (20, 39a, c, d),
le capteur comprend en outre un port d'entrée (16, 40a, b) qui est connecté à l'unité de commande interne (24), et où le moyen de configuration (22, 32a, b, c, d) est adapté pour sélectionner un mode de transmission où un signal de sortie est créé en dépendance du signal d'entrée reçu via le port d'entrée (16, 40a, b) et appliqué au premier port de sortie (18, 38a, b, c, d) et/ou au deuxième port de sortie (20, 39a, c, d),
**caractérisé en ce que** le premier port de sortie (18, 38a, b, c, d) ou le deuxième port de sortie (20, 39a, c, d) peut être connecté à un port d'entrée d'un capteur (10, 30) identique via une ligne physique.

2. Capteur selon la revendication 1, **caractérisé en ce que** le moyen de configuration (22, 32a, b, c, d) est conçu sous forme d'un commutateur, par exemple un commutateur DIP.

3. Capteur selon la revendication 1, **caractérisé en ce que** le moyen de configuration (22, 32a, b, c, d) est conçu sous forme de logiciel sur l'unité de commande interne (24, 44a).

4. Capteur selon l'une des revendications précédentes, **caractérisé en ce que** le moyen de configuration (22, 32a, b, c, d) est adapté pour sélectionner un mode de transmission réglé sur un mode d'entrée, où le signal d'entrée est un signal combiné et le signal décodé est lié à des informations de première unité de détection (12, 34a, b, c, d) et à des informations de deuxième unité de détection (14, 36a, b, c, d).

5. Capteur selon l'une des revendications précédentes, **caractérisé en ce que** le moyen de configuration (22, 32a, b, c, d) est adapté pour sélectionner un mode de transmission où le signal de sortie est créé sur la base d'informations concernant le signal source fourni par la première unité de détection (12, 34a, b, c, d) et le signal source fourni par la deuxième unité de détection (14, 36a, b, c, d) et des informations du signal d'entrée.

6. Capteur selon l'une des revendications précédentes, **caractérisé en ce que** le signal combiné utilise un protocole série.

7. Capteur selon l'une des revendications précédentes, **caractérisé en ce que** le premier port de sortie (18, 38a, b, c, d) et/ou le deuxième port de sortie (20, 39a, c, d) comprend un relais à semi-conducteurs.

8. Capteur selon l'une des revendications précédentes, **caractérisé en ce que** le premier port de sortie (18, 38a, b, c, d) et/ou le deuxième port de sortie (20, 39a, c, d) comprend un commutateur électronique.

9. Capteur selon la revendication 8, **caractérisé en ce que** le premier port de sortie (18, 38a, b, c, d) comprend un OptoMos.

10. Agencement de capteurs comprenant au moins un premier et un deuxième capteur selon l'une des revendications précédentes, où le port d'entrée (16, 40a, b) d'un deuxième capteur est connecté au premier port de sortie (18, 38a, b, c, d) ou au deuxième port de sortie (20, 39a, c, d) du premier capteur précédent.

11. Agencement de capteur selon la revendication 10, **caractérisé en ce que** le premier capteur est réglé sur le deuxième mode d'entrée où le signal combiné est émis sur le premier port de sortie (18, 38a, b, c, d), et le deuxième capteur est réglé sur le premier mode de sortie.

12. Agencement de capteur selon l'une des revendications précédentes 10 et 11, **caractérisé en ce que** la première unité de détection (12, 34a, b, c, d) et/ou la deuxième unité de détection (14, 36a, b, c, d) est conçue sous la forme d'une unité de détection de présence (14, 36a, b, c, d).

13. Agencement de capteur selon l'une des revendications précédentes 10 à 12, **caractérisé en ce que** la première unité de détection (12, 34a, b, c, d) et/ou la deuxième unité de détection (14, 36a, b, c, d) est conçue sous la forme d'une unité de détection de mouvement (12, 34a, b, c, d).
